# EUROPÄISCHE PATENTANMELDUNG

(11) **EP 4 656 326 A1**
(43) Veröffentlichungstag der Anmeldung: **03.12.2025**
(21) Anmeldenummer: 24192619.5
(22) Anmeldetag: 12.10.2023
(51) Int. Cl.: B23K 33/00, B23K 101/00, B23K 103/04

(54) **KRAFTFAHRZEUGKOMPONENTE**

(62) Teilanmeldung aus: 23203268.0
(71) Anmelder: Benteler Automobiltechnik GmbH, 33102 Paderborn (DE); VOLKSWAGEN AG, 38440 Wolfsburg (DE)
(72) Erfinder: Fortmeier, Günter, 33129 Delbrück (DE); Henksmeier, Thomas, 59329 Wadersloh (DE); Niggemeyer, Norbert, 33102 Paderborn (DE); Schultz, Erik, 33102 Paderborn (DE)
(74) Vertreter: Ksoll, Peter

(57) **Zusammenfassung**

Eine Kraftfahrzeugkomponente 2 weist zwei Bauteile 1, 11 aus Stahl mit unterschiedlicher Wandstärke t1, t2 auf, die in einem Winkel α zueinander angeordnet und durch eine Schweißnaht 18 verbunden sind. Eine Fügefläche 13 am Endabschnitt 5 des ersten Bauteils 1 weist eine spanlos gefertigte Schräge 7 auf. Zur Ausbildung der Schräge 7 wird ein Endabschnitt 5 einer Ausgangsplatine 3 spanlos umgeformt. Anschließend wird der Endabschnitt 5 endseitig beschnitten und stirnseitig am Endabschnitt 5 eine Stoßfläche 10 erzeugt. Die beiden Bauteile 1, 11 werden relativ zueinander positioniert, so dass die Fügefläche 13 des ersten Bauteils 1 und die Fügefläche 14 des zweiten Bauteils 11 einander zugewandt sind. Die stoffschlüssige Fügung des ersten Bauteils 1 und des zweiten Bauteils 11 erfolgt durch eine Schweißnaht 18 an den Fügeflächen 13, 14.

## Beschreibung

Die Erfindung betrifft eine Kraftfahrzeugkomponente gemäß den Merkmalen im Oberbegriff von Anspruch 1.

Schweißen ist ein die Gestaltung bestimmendes Fertigungsverfahren für Schweißbauteile und eines der wichtigsten und am weitesten verbreiteten Fügeverfahren, insbesondere im Automobilbau. Unter Schweißen versteht man das unlösbare stoffschlüssige Verbinden von Bauteilen unter Anwendung von Wärme und Druck mit oder ohne Schweißzusatzwerkstoffen. Beim Verbindungsschweißen werden die Teile durch Schweißnähte am Schweißstoß zum Schweißbauteil zusammengefügt. Mehrere Schweißbauteile ergeben eine Schweißgruppe und mehrere Schweißgruppen eine Schweißkonstruktion.

Durch Schweißen werden die Bauteile bzw. Bauteilabschnitte so miteinander verbunden, dass diese die an sie gestellten Anforderungen über eine erwartete Lebensdauer erfüllen können. Dazu müssen die Schweißverbindungen anforderungsgerechte Qualitätskriterien und Gütemerkmale erfüllen. Diese sind eng mit den an die jeweiligen Bauteilanforderungen im Einsatz gebunden. Ausreichende Qualität ist dann zu erwarten, wenn auftretende Unregelmäßigkeiten der Schweißnaht, die während oder nach dem Schweißen entstehen, für die Nutzung des geschweißten Bauteils toleriert werden können.

Als Schweißstoß wird der Bereich bezeichnet, in dem die Schweißteile miteinander vereinigt werden. Am Schweißstoß hat die Schweißnahtausführung und die Schweißnahtlage einen entscheidenden Einfluss auf die funktionsrelevanten Parameter der Schweißnaht, wie zum Beispiel den Einbrand. Als Einbrandtiefe bezeichnet man den Abstand der Oberfläche des durch Schweißen geschmolzenen Grundwerkstoffs und der ursprünglichen Oberfläche des Grundwerkstoffs, also die Tiefe der aufgeschmolzenen Zone im Grundwerkstoff.

Die Einbrandtiefe steht in engem Zusammenhang mit der Fügefestigkeit. Insbesondere bei Kraftfahrzeugkomponenten, die während des Fahrens hoch beansprucht werden, kommt der Festigkeit der Schweißnähte und der Schweißnahtqualität besondere Bedeutung zu.

Der Erfindung liegt ausgehend vom Stand der Technik die Aufgabe zugrunde, eine aus zumindest zwei Bauteilen geschweißte Kraftfahrzeugkomponente im Belastungsverhalten zu verbessern und in der Lebensdauer zu steigern, ohne das Gewicht nachteilig zu erhöhen.

Die Lösung der Aufgabe besteht nach der Erfindung in einer Kraftfahrzeugkomponente gemäß Anspruch 1.

Vorteilhafte Weiterbildungen und Ausgestaltungen der erfindungsgemäßen Kraftfahrzeugkomponente sind Gegenstand der abhängigen Ansprüche.

Eine erfindungsgemäße Kraftfahrzeugkomponente weist ein erstes Bauteil und ein zweites Bauteil auf. Die beiden Bauteile bestehen aus Stahl und sind schweißtechnisch mittels zumindest einer Schweißnaht verbunden. Das erste Bauteil weist eine Wand mit einer Wandstärke auf und das zweite Bauteil weist eine Wand mit einer Wandstärke auf. Das erste Bauteil und das zweite Bauteil weisen jeweils eine Fügefläche auf. Die beiden Bauteile sind in einem Winkel zueinander angeordnet und an den einander zugewandten Fügeflächen durch eine Schweißnaht verbunden.

Erfindungsgemäß weist die Fügefläche am Endabschnitt des ersten Bauteils eine spanlos gefertigte Schräge auf.

Der Endabschnitt des ersten Bauteils erhält eine auf die schweißtechnische Fügung optimierte Nahtvorbereitung. Die Fügefläche wird durch den Abschnitt der Schräge verlängert. Durch die Schräge in der Fügefläche des Endabschnitts erhält der Fügespalt zwischen der Fügefläche des ersten Bauteils und der Fügefläche am zweiten Bauteil eine V-förmige Konfiguration. Der Fügespalt zwischen dem Endabschnitt des ersten Bauteils und dem zweiten Bauteil ist V-förmig konfiguriert. Durch die Schräge und den V-förmigen Fügespalt ist ein sehr guter Einbrand im ersten Bauteil erreicht. Als Einbrand bezeichnet man die Tiefe der aufgeschmolzenen Zone im Grundwerkstoff. Die Erfindung verbessert den Einbrand, insbesondere im ersten Bauteil. Es wird ein bauteiloptimierter und verfahrenstechnisch verbesserter Einbrand im ersten Bauteil erzeugt, ohne dass es zu einem Durchbrand in der dünneren Wand des zweiten Bauteils kommt.

Die Erfindung schafft eine Kraftfahrzeugkomponente mit höherer Lebensdauer ohne eine Erhöhung des Bauteilgewichts. Die schweißtechnische Fügung zwischen den beiden Bauteilen ist hochstabil und weist ein optimiertes statisches und insbesondere dynamisches Belastungsverhalten auf.

Bei der erfindungsgemäßen Kraftfahrzeugkomponente handelt es sich insbesondere um Fahrwerkskomponenten wie Achsen, insbesondere eine Verbundlenkerachse. Insbesondere handelt es sich um eine Verbundlenkerachse mit einem ersten Bauteil in Form eines Torsionsprofils und zweiten Bauteilen in Form von Seitenarmen bzw. Längslenkern.

Kraftfahrzeugkomponenten der erfindungsgemäßen Art können alle Schweißkonstruktionen sein, bei denen zumindest zwei Bauteile mit unterschiedlichen Wandstärken durch eine Schweißverbindung, insbesondere mit einem T-, L- oder einem X-Stoß verbunden sind.

Die Wand des ersten Bauteils und die Wand des zweiten Bauteils können eine gleich große Wandstärke besitzen. Die Wandstärken von erstem Bauteil und zweitem Bauteil können auch voneinander verschieden sein. Die Erfindung ist besonders vorteilhaft für Kraftfahrzeugkomponenten, bei welchen das erste Bauteil eine Wand mit einer Wandstärke aufweist, die größer ist als die Wandstärke einer Wand des zweiten Bauteils. Weiterhin ist es möglich, dass das erste Bauteil eine Wand mit einer Wandstärke aufweist, die kleiner ist als die Wandstärke der Wand des zweiten Bauteils.

Insbesondere bei geschweißten Kraftfahrzeugkomponenten aus Bauteilen mit voneinander verschiedenen Wandstärken hat sich gezeigt, dass es wegen des Wandstärkenunterschieds schwierig ist, einen hohen Einbrand der Schweißnaht in das dickere Bauteil, also das Bauteil mit der größeren Wandstärke zu erhalten, ohne dass es zu einem Durchbrand an dem Bauteil mit geringerer Wandstärke kommt. Durch den geringeren Einbrand kann es zu einer Reduzierung der Lebensdauer der geschweißten Kraftfahrzeugkomponente kommen.

Durch die Schräge und den V-förmigen Fügespalt wird ein hoher Einbrand im ersten Bauteil, also dem Bauteil mit der dickeren bzw. stärken Wand, gewährleistet.

Durch die Erfindung wird ein Einbrand von 2 % bis 10 % sicher gewährleistet mit einer Flankeneinbrandlänge von 70 % bis 90 %. Insbesondere ermöglicht die Erfindung einen Einbrand von bis zu 30 % prozesssicher zu erreichen. Praktische Versuche lassen noch höhere Werte für den Einbrand erwarten, so dass der Einbrand bis auf größer 50 % gesteigert werden kann.

Durch die erfindungsgemäß vorgesehene Schräge kann beim Schweißen Schweißzusatzwerkstoff zwischen die Bauteile im Fügespalt geschoben werden, so dass die Wurzel der Schweißnaht weiter bzw. tiefer in den Fügespalt verlagert wird. In der Folge ergibt sich ein deutlich höherer Einbrand.

Die Schräge kann sich entlang einer gesamten Stoßkante eines Kraftfahrzeugbauteils erstecken. Insbesondere ist die Schräge in den Bereichen einer Stoßkante vorgesehen, in welchen die größten Belastungen durch äußere Kräfte auftreten. Bei einem Torsionsprofil einer Verbundlenkerachse ist die Schräge insbesondere an den Fügeflächen der Schenkel des Torsionsprofils vorgesehen. Bei einem im Querschnitt U- oder V-förmigen Torsionsprofil ist die Schräge auf der Innenseite des Torsionsprofils entlang der Schenkel angeordnet.

Die Schräge kann auch nur auf einem Teilabschnitt der Länge der Fügefläche am Endabschnitt des ersten Bauteils vorgesehen sein. Insbesondere ist die Schräge von einem freien Ende der Wand des ersten Bauteils ausgehend über einen Längenabschnitt von ca. 30 % bis 75 %, insbesondere von ca. 50 %, der Länge der Wand des ersten Bauteils ausgebildet. Bei einem im Querschnitt U- oder V-förmigen Torsionsprofil kann die Schräge innenseitig des Querschnitts auf der Innenseite des Torsionsprofils an den Schenkeln angeordnet sein. Weiterhin kann die Schräge außenseitig des Querschnitts auf der Außenseite des Torsionsprofils entlang der Schenkel angeordnet sein.

Die tangentiale Länge der Schräge ist im Querschnitt des Torsionsprofils in Richtung des Umfangs des Torsionsprofils gemessen und kann sich über die gesamte Umfangslänge der Stirnseite des Torsionsprofils erstrecken. Die tangentiale Länge der Schräge kann aber auch nur über die Länge eines Schenkels verlaufen oder auf einem Teilabschnitt der Länge eines Schenkels eines Torsionsprofils vorgesehen sein

Die Schräge verläuft in einem Winkel zur Längsachse der Wand des ersten Bauteils. Vorzugsweise liegt der Winkel in einem Bereich zwischen 25° bis 60°. Für die Praxis vorteilhaft wird insbesondere ein Winkel im Bereich von 30° bis 45° angesehen.

Die Fügefläche des ersten Endabschnitts weist erfindungsgemäß eine stirnseitige Stoßfläche auf. Die Stoßfläche befindet stirnseitig am freien Ende des Endabschnitts. Die Stoßfläche verläuft im Wesentlichen rechtwinklig zur Längsachse der Wand des Torsionsprofils. Mit der Stoßfläche stößt das erste Bauteil stumpf gegen das zweite Bauteil.

Die Erfindung sieht vor, dass die Stoßfläche eine rechtwinklig zur Längsachse der Wand des ersten Bauteils gemessene Breite aufweist, welche größer ist als die Wandstärke der Wand des ersten Bauteils.

Die Schräge der Fügefläche läuft in die Stirnseite des Endabschnitts aus. An die Schräge schließt sich die Stoßfläche an.

Erfindungsgemäß ist die Schräge der Fügefläche am Endabschnitt des ersten Bauteils spanlos erzeugt. Hierzu wird eine gesteuerte plastische Formänderung am Endabschnitt des ersten Bauteils vorgenommen. Der Endabschnitt wird durch Aufbringen einer äußeren Kraft in die gewünschte Form gebracht. Dies erfolgt insbesondere durch Biegeumformen oder Schubumformen.

Das Verfahren zur Herstellung einer geschweißten Kraftfahrzeugkomponente, welche zumindest zwei Bauteile aus Stahl mit unterschiedlicher Wandstärke aufweist, die in einem Winkel zueinander angeordnet und durch eine Schweißnaht verbunden sind, weist folgende Schritte auf:
- Fertigen eines ersten Bauteils mit einer Fügefläche, welche eine Schräge und eine Stoßfläche aufweist, wozu
   - eine Ausgangsplatine bereitgestellt wird, welche eine Wand mit einer Wandstärke aufweist und
   - ein Endabschnitt der Ausgangsplatine umgeformt und am Endabschnitt eine Schräge ausgebildet wird und
   - der Endabschnitt endseitig beschnitten und stirnseitig am Endabschnitt eine Stoßfläche erzeugt wird;
- Bereitstellen eines zweiten Bauteils, welches eine Wand mit einer Wandstärke besitzt und das zweite Bauteil eine Fügefläche aufweist;
- Positionieren des ersten Bauteils und des zweiten Bauteils in einem Winkel relativ zueinander, so dass die Fügefläche des ersten Bauteils und die Fügefläche des zweiten Bauteils einander zugewandt sind;
- Stoffschlüssige Fügung des ersten Bauteils und des zweiten Bauteils durch eine Schweißnaht an den Fügeflächen.

Insbesondere wir der Endabschnitt beim Umformen seitlich verschoben, gebogen oder verprägt. Dies erfolgt wie bereits vorstehend ausgeführt, insbesondere durch Biegeumformen oder Schubumformen.

Zur Herstellung der Schräge am Endabschnitt kann der Endabschnitt der Ausgangsplatine zunächst S-förmig umgeformt werden. Anschließend wird der Endabschnitt beschnitten und ein Endstück am freien Ende des Endabschnitts von diesem abgetrennt. Der Beschnitt erfolgt rechtwinklig zur Längsachse der Ausgangsplatine bzw. der Wand der Ausgangsplatine. Beim Beschnittvorgang wird insbesondere auf der Seite des Gegenhalters des Schneidwerkzeugs eine leichte Fase erzeugt. Die Beschnittlinie verläuft folglich nicht geradlinig sondern weist am Ende der Beschnittlinie eine geringfügig schräg verlaufende Fase bzw. Fläche auf.

Die Ausgangsplatine kann vor oder nach dem Umformen und Beschneiden des Endabschnitts einer weiteren Umformung unterzogen werden. Bei diesem Umformschritt erhält die Ausgangsplatine, zumindest bereichsweise, insbesondere über ihre Länge eine Querschnittskonfiguration des ersten Bauteils.

Weiterhin ist vorgesehen, dass der endseitige Beschnitt des Endabschnitts in einem Winkel quer, insbesondere im Wesentlichen rechtwinklig zur Längsachse der Wand der Ausgangsplatine erfolgt.

Im Rahmen der Erfindung ist insbesondere vorgesehen, dass das erste Bauteil und das zweite Bauteil voneinander verschiedene Wandstärken besitzen. Insbesondere ist die Wandstärke des zweiten Bauteils zumindest bereichsweise geringer als die Wandstärke des ersten Bauteils im Bereich der Fügeverbindung. Dementsprechend wird ein zweites Bauteil bereitgestellt, welches eine Wand mit einer Wandstärke besitzt, welche von der Wandstärke der Wand des ersten Bauteils verschieden ist.

Die Erfindung ist nachfolgenden anhand von Zeichnungen näher beschrieben. Es zeigen:
- Figur 1a) bis d): technisch schematisiert die Vorgehensweise zur Fertigung eines ersten Bauteils mit einer Fügefläche, welche eine Schräge und eine Stoßfläche aufweist;
- Figur 2a): einen Ausschnitt aus der Wand eines ersten Bauteils und einen Ausschnitt aus der Wand eines zweiten Bauteils vor der schweißtechnischen Fügung;
- Figur 2b): die Bauteile entsprechend der Darstellung der Figur 2a) nach der schweißtechnischen Fügung;
- Figur 3: eine Verbundlenkerachse in einer perspektivischen Darstellung;
- Figur 4: eine Ansicht auf die Stirnseite des Endabschnitts eines Torsionsprofils einer Verbundlenkerachse und
- Figur 5: eine Ansicht auf die Stirnseite des Endabschnitts einer weiteren Ausführungsform eines Torsionsprofils.

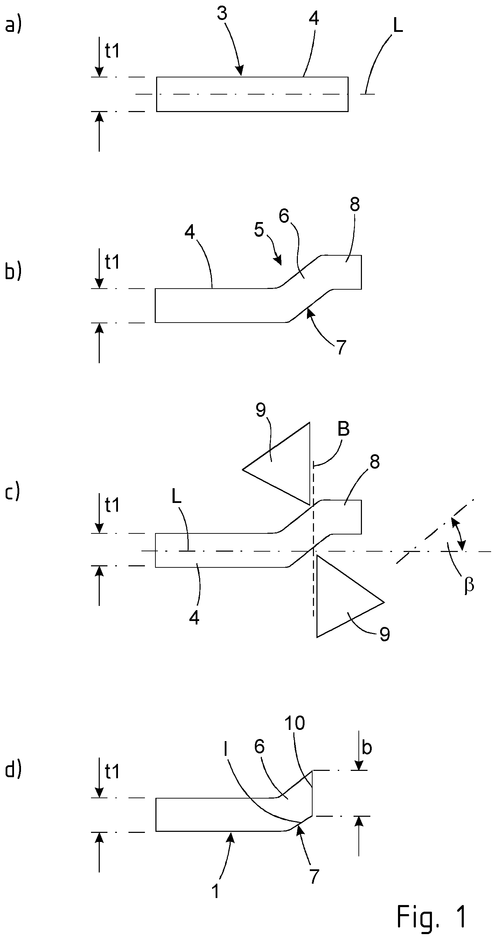

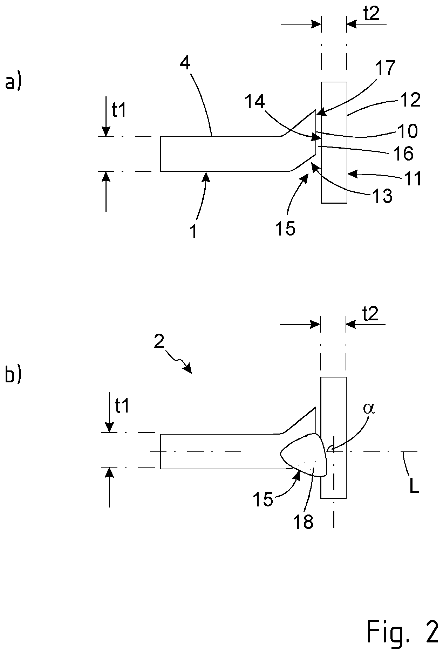

Anhand der Figuren 1a) bis d) ist der Umformprozess zur Herstellung eines ersten Bauteils 1 einer Kraftfahrzeugkomponente 2 erläutert. Die Kraftfahrzeugkomponente 2 ist in der Figur 2b) dargestellt.

Die Figur 1a) zeigt eine Ausgangsplatine 3. Die Ausgangsplatine 3 weist eine Wand 4 mit einer Wandstärke t1 auf.

Ein Endabschnitt 5 der Ausgangsplatine 3 wird spanlos umgeformt. Hierbei wird der Endabschnitt 5 plastisch verformt und S-förmig konfiguriert. Auf diese Weise entsteht am Endabschnitt 5 ein Schenkel 6 mit einer Schräge 7 und ein parallel zur Längsachse L der Wand 4 der Ausgangsplatine 3 verlaufendes Endstück 8. Dies zeigt die Darstellung der Figur 1b). Das Endstück 8 ist seitlich parallel zur Längsachse L der Wand 4 verschoben.

Die Figur 1c) verdeutlicht die Beschnittoperation am Endabschnitt 5. Am Endabschnitt 5 wird ein endseitiger Beschnitt vorgenommen. Das Schneidwerkzeug ist mit dem Bezugszeichen 9 gekennzeichnet. Der Beschnitt erfolgt in einem Winkel rechtwinklig zur Längsachse L der Wand 4 der Ausgangsplatine 3 entlang der Beschnittlinie B.

Die Beschnittoperation erfolgt im Bereich des Schenkels 6 mit der Schräge 7. Beim Beschnitt wird das Endstück 8 entfernt. Stirnseitig am Endabschnitt 5 wird eine rechtwinklig zur Längsachse L verlaufende Stoßfläche 10 erzeugt.

Die Figur 1d) zeigt das fertig beschnittene erste Bauteil 1.

Die Stoßfläche 10 weist eine rechtwinklig zur Längsachse L der Wand 4 des ersten Bauteils 1 gemessene Breite b auf, welche größer ist als die Wandstärke t1 der Wand 4 des ersten Bauteils 1. Das Verhältnis der Wandstärke t1 der Wand 4 des ersten Bauteils 1 zur Breite b der Stoßfläche 10 ist zwischen 1:1,1 und 1:1,5 bemessen.

Die Schräge 7 weist eine axiale Länge I auf. Die axiale Länge I der Schräge 7 ist in Richtung der Längsachse L der Wand 4 des Torsionsprofils 1 gemessen. Die axiale Länge I ist gemessen im Bereich der späteren Fügeverbindung. Die Schräge 7 verläuft in einem Winkel β von 25° bis 60°, insbesondere von 30° bis 45° zur Längsachse L der Wand 4 des ersten Bauteils 1. Das Verhältnis der axialen Länge I der Schräge 7 zur Wandstärke t1 der Wand des ersten Bauteils 1 ist zwischen 1:1 und 1:5 bemessen. Die Schräge 7 befindet sich auf der Seite des Endabschnitts 5 des ersten Bauteils, welches mit dem zweiten Bauteil 11 den spitzen Winkel β einschließt.

Zur Herstellung des Kraftfahrzeugbauteils wird ein zweites Bauteil 11 aus Stahl bereitgestellt. Das zweite Bauteil 11 weist eine Wand 12 mit einer Wandstärke t2 auf. Die Wandstärke t1 der Wand 4 des ersten Bauteils 1 ist größer als die Wandstärke t2 der Wand 12 des zweiten Bauteils 11.

Das erste Bauteil 1 weist am Endabschnitt 5 eine Fügefläche 13 auf. Die Fügefläche 13 umfasst die Schräge 7 und die stirnseitige Stoßfläche 10.

Das zweite Bauteil 11 weist ebenfalls eine Fügefläche 14 auf.

Das erste Bauteil 1 und zweite Bauteil 11 werden durch eine Schweißverbindung stoffschlüssig gefügt. Zur Herstellung der Schweißverbindung werden das erste Bauteil 1 und das zweite Bauteil 11 zueinander positioniert. Dies zeigt die Darstellung der Figur 2a). Das erste Bauteil 1 und das zweite Bauteil 11 sind in einem Winkel α zueinander angeordnet, insbesondere stößt das erste Bauteil 1 stumpf in einen rechten Winkel α mit T-Stoß an das zweite Bauteil 11.

Die Fügefläche 13 des ersten Bauteils 1 und die Fügefläche 14 des zweiten Bauteils 11 sind einander zugewandt. Die Stoßfläche 10 verläuft rechtwinklig zur Längsachse L der Wand 4 des ersten Bauteils 1. Die Stoßfläche 10 ist parallel zur Fügefläche 14 des zweiten Bauteils 11 orientiert. Zwischen der Fügefläche 13 des ersten Bauteils 1 und der Fügefläche 14 des zweiten Bauteils 11 ist ein V-förmiger Fügespalt 15 gebildet. Im Tiefsten des V-förmigen Fügespalts 15 schließt sich ein parallel zwischen der Stoßfläche 10 und der Fügefläche 14 des zweiten Bauteils 11 ausgebildeter Spaltabschnitt 16 an. Die Schräge 7 verläuft in einem spitzen Winkel zur Stirnseite 17 hin. An der Stirnseite 17 endet die Schräge 7. Die Stoßfläche 10 schließt sich mit einem stumpfen Winkel an die Schräge 7 an.

Die stoffschlüssige Fügeverbindung erfolgt über eine Schweißnaht 18, wie in der Figur 2b) dargestellt. Durch die Schräge 7 und den V-förmig konfigurierten Fügespalt 15 wird die Schweißnaht 18 effizient, wobei ein hoher Einbrand im ersten Bauteil 1 erreicht wird.

Durch die Nahtvorbereitung und die Ausbildung der Schräge 7 in der Fügefläche 13 am ersten Bauteil 1 sowie die V-förmige Konfiguration des Fügespalts 15 entsteht eine Schweißverbindung zwischen erstem Bauteil 1 und zweitem Bauteil 11 mit einer anforderungsgerechten Qualität und Lebensdauer. Der Einbrand der Schweißnaht 18 am ersten Bauteil 1 kann deutlich erhöht werden ohne dass es zu einem Durchbrand am zweiten Bauteil 11 kommt. Die Schweißnaht 18 genügt höchsten Festigkeitsanforderungen, wodurch insgesamt die Lebensdauer der Kraftfahrzeugkomponente 2 erhöht werden kann, ohne diese im Gesamtgewicht zu erhöhen.

Bei der Kraftfahrzeugkomponente 2 handelt es sich insbesondere um eine Verbundlenkerachse. Bei der Verbundlenkerachse wird ein erstes Bauteil 1 in Form eines Torsionsprofils jeweils endseitig mit einem zweiten Bauteil 11 in Form eines Seitenarms schweißtechnisch gefügt.

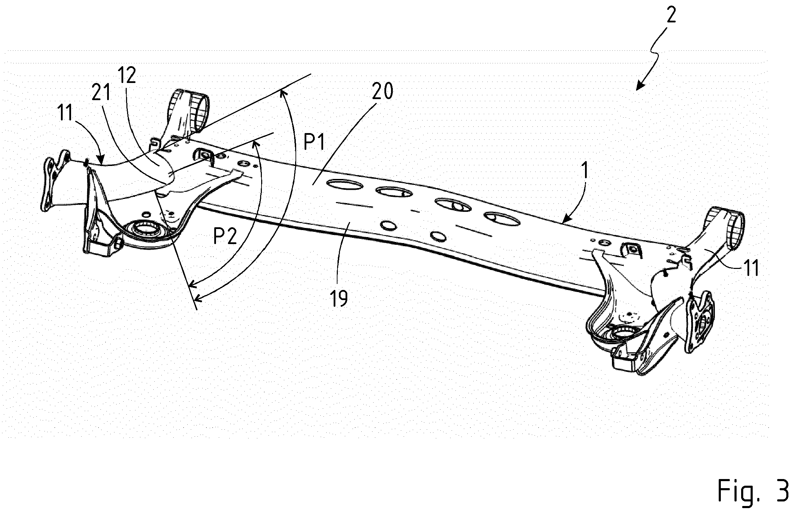

Die Figur 3 zeigt eine Kraftfahrzeugkomponente 2 in Form einer Verbundlenkerachse mit einem ersten Bauteil 1, bei dem es sich um das Torsionsprofil handelt, und zweiten Bauteilen 11, bei denen es sich jeweils um einen Seitenarm der Verbundlenkerachse handelt. Das Torsionsprofil weist eine Wand 4 mit einer Wandstärke t1 auf. Jeder Seitenarm weist eine Wand 12 mit einer Wandstärke t2 auf. Die Wandstärke t1 der Wand 4 des Torsionsprofils kann größer als die Wandstärke t2 eines Seitenarms sein. Auf die Ausführungen zu den Darstellungen in den Figuren 1 und 2 wird verwiesen. Das Torsionsprofil hat einen U-förmigen Querschnitt mit zwei Seitenschenkeln 19, die über einen Scheitelabschnitt 20 verbunden sind. Mit dem Endabschnitt 5 stößt das Torsionsprofil an die Wand 12 eines Seitenarms. Die Fügefläche 13 am Endabschnitt 5 des Torsionsprofils ist an die Außenkontur der Wand 12 des Seitenarms angepasst.

Durch den Pfeil P1 ist schematisch die Länge eines Seitenschenkels 19 verdeutlicht, mit welchem der Endabschnitt 5 des ersten Bauteils 1 bzw. des Torsionsprofils am Außenumfang eines Seitenarms anstößt. Dieser beträgt bezogen auf den Umfang des im Querschnitt runden Seitenarms etwa 180° +/- 15°.

Durch den Pfeil P2 ist die Länge eines Längenabschnitts 21 des ersten Bauteils 1 bzw. eines Seitenschenkels 19 verdeutlicht, in welchem die Schräge 7 auf der Innenseite des Seitenschenkels 19 vorgesehen ist. Die Schräge 7 ist im unteren Längenabschnitt 21 des Seitenschenkels 19 vorgesehen. Insbesondere erstreckt sich die Schräge 7 über zwei Drittel, insbesondere ca. der Hälfte der Länge eines Seitenschenkels 19. Bezogen auf den Querschnitt eines Seitenarms erstreckt sich die Schräge 7 auf einen Umfangsabschnitt von ca. 90° +/- 15°. Die Schräge 7 ist vom freien Schenkelende ausgehend im unteren Längenabschnitt 21 eines Seitenschenkels 19 vorgesehen.

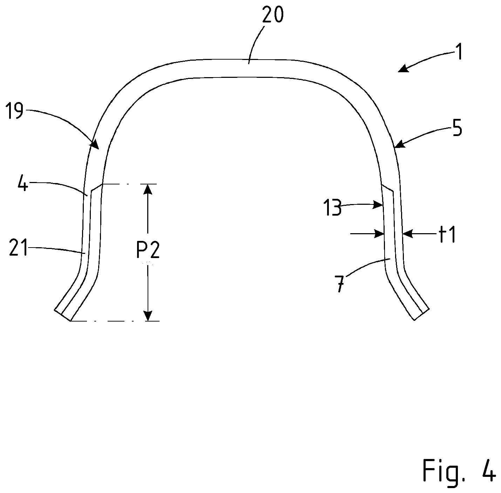

Die Figur 4 zeigt eine Stirnansicht auf die Fügefläche 13 an einem Endabschnitt 5 eines ersten Bauteils 1 in Form eines Torsionsprofils. Das Torsionsprofil weist eine Wand 4 mit einer Wandstärke t1 auf. In der Fügefläche 13 am Endabschnitt 5 des Torsionsprofils ist eine erfindungsgemäß erzeugte Schräge 7 vorgesehen. Die Schräge 7 verläuft innenseitig der Seitenschenkel 19 des Torsionsprofils.

Die Schräge 7 ist in dem vom freien Schenkelende ausgehenden unteren Längenabschnitt 21 des Seitenschenkels 19 vorgesehen. Die tangentiale Länge des Längenabschnitts 21 ist durch den Pfeil P2 gekennzeichnet. Im dargestellten Ausführungsbeispiel erstreckt sich die Schräge 7 etwa über die Hälfte der Länge eines Seitenschenkels 19.

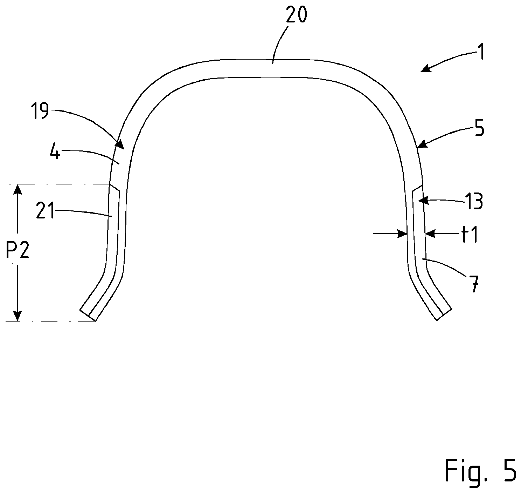

Die Figur 5 zeigt eine Stirnansicht auf die Fügefläche 13 in einer alternativen Ausgestaltung am Endabschnitt 5 eines Torsionsprofils 1. Anders als bei der Ausführungsform gemäß der Figur 4 ist hier die Schräge 7 außenseitig der Seitenschenkel 19 des Torsionsprofils angeordnet. Die Schräge 7 ist wie auch bei den anderen Ausführungsformen durch spanende Bearbeitung erzeugt. Die Schräge 7 erstreckt sich in einem vom freien Schenkelende ausgehenden unteren Längenabschnitt 21 eines jeden Seitenschenkels 19. Ansonsten entspricht die Ausführungsform derjenigen der Figur 4 und die zugehörige Beschreibung.

### Bezugszeichen:

- 1 -: erstes Bauteil
- 2 -: Kraftfahrzeugkomponente
- 3 -: Ausgangsplatine
- 4 -: Wand
- 5 -: Endabschnitt
- 6 -: Schenkel
- 7 -: Schräge
- 8 -: Endstück
- 9 -: Schneidwerkzeug
- 10 -: Stoßfläche
- 11 -: zweites Bauteil
- 12 -: Wand
- 13 -: Fügefläche
- 14 -: Fügefläche
- 15 -: Fügespalt
- 16 -: Spaltabschnitt
- 17 -: Stirnseite
- 18 -: Schweißnaht
- 19 -: Seitenschenkel
- 20 -: Scheitelabschnitt
- 21 -: Längenabschnitt v. 19

- b -: Breite
- B -: Beschnittlinie
- L -: Längsachse
- t1 -: Wandstärke
- t2 -: Wandstärke
- α -: Winkel
- β -: Winkel
- I -: Länge v. 7

## Patentansprüche

1. Kraftfahrzeugkomponente, welche ein erstes Bauteil (1) aus Stahl und ein zweites Bauteil (11) aus Stahl umfasst, wobei das erste Bauteil (1) an einem Endabschnitt (5) eine Fügefläche (13) aufweist und das zweite Bauteil (11) eine Fügefläche (14) aufweist, wobei das erste Bauteil (1) und das zweite Bauteil (11) in einem Winkel (α) zueinander angeordnet und an den einander zugewandten Fügeflächen (13, 14) durch eine Schweißnaht (18) verbunden sind, **dadurch gekennzeichnet, dass** die Fügefläche (13) am Endabschnitt (5) des ersten Bauteils (1) eine spanlos gefertigte Schräge (7) aufweist und ein Fügespalt (15) zwischen der Fügefläche (13) des ersten Bauteils (1) und der Fügefläche (14) am zweiten Bauteil (11) durch die Schräge (7) in der Fügefläche (13) des Endabschnitts (5) eine V-förmige Konfiguration aufweist und der Endabschnitt (5) des ersten Bauteils (1) stirnseitig eine Stoßfläche (10) aufweist, wobei die Stoßfläche (10) im Wesentlichen rechtwinklig zur Längsachse (L) der Wand (4) des ersten Bauteils (1) verläuft und die Stoßfläche (10) eine rechtwinklig zur Längsachse (L) der Wand (4) des ersten Bauteils (1) gemessene Breite (b) aufweist, welche größer ist als die Wandstärke (t1) der Wand (4) des ersten Bauteils (1) und das erste Bauteil (1) mit der Stoßfläche (10) stumpf gegen das zweite Bauteil (11) stößt.

2. Kraftfahrzeugkomponente nach Anspruch 1, **dadurch gekennzeichnet, dass** das erste Bauteil (1) eine Wand (4) mit einer Wandstärke (t1) und das zweite Bauteil (11) eine Wand (12) mit einer Wandstärke (t2) aufweist, wobei die Wandstärke (t1) der Wand (4) des ersten Bauteils (1) größer ist als die Wandstärke (t2) des zweiten Bauteils (11).

3. Kraftfahrzeugkomponente nach Anspruch 1, **dadurch gekennzeichnet, dass** das erste Bauteil (1) eine Wand (4) mit einer Wandstärke (t1) und das zweite Bauteil (11) eine Wand (12) mit einer Wandstärke (t2) aufweist, wobei die Wandstärke (t1) der Wand (4) des ersten Bauteils (1) kleiner ist als die Wandstärke (t2) des zweiten Bauteils (11).

4. Kraftfahrzeugkomponente nach einem der Ansprüche 1 bis 3, **dadurch gekennzeichnet, dass** die Schräge (7) in einem Winkel (β) von 25° bis 60°, insbesondere von 30° bis 45° zur Längsachse (L) zur Wand (4) des ersten Bauteils (1) verläuft.

5. Kraftfahrzeugkomponente nach einem der Ansprüche 1 bis 4, **dadurch gekennzeichnet, dass** die Schräge (7) in einem vom freien Ende einer Wand (4) des ersten Bauteils (1) ausgehenden Längenabschnitt (21) vorgesehen ist.
